# EUROPEAN PATENT APPLICATION

(11) **EP 4 492 869 A1**
(43) Date of publication of application: **15.01.2025**
(21) Application number: 23766035.2
(22) Date of filing: 08.03.2023
(51) Int. Cl.: H04W 40/24

(54) **METHOD AND SYSTEM FOR QUERYING AND RESPONDING TO GROUP ELECTRONIC PRICE TAG**

(30) Priority: 11.03.2022 CN 202210242321
(71) Applicant: Hanshow Technology Co., Ltd., Jiaxing, Zhejiang 314031 (CN)
(72) Inventor: LIANG, Min, Jiaxing, Zhejiang 314031 (CN); HOU, Shiguo, Jiaxing, Zhejiang 314031 (CN); JI, Yaping, Jiaxing, Zhejiang 314031 (CN); WANG, Yujing, Jiaxing, Zhejiang 314031 (CN); ZHANG, Ju, Jiaxing, Zhejiang 314031 (CN); ZHANG, Guofeng, Jiaxing, Zhejiang 314031 (CN)
(74) Representative: Patentanwälte Olbricht Buchhold Keulertz
(86) International application number: PCT/CN2023/080257
(87) International publication number: WO 2023/169458

(57) **Abstract**

The present disclosure discloses a method and system for querying and responding to grouped electronic shelf labels, which simplify a large number of query instructions into one query instruction, so that a transmission data volume for querying a large number of electronic shelf labels is greatly saved, the overhead caused by queries on the system is reduced, and the system service throughput is improved.

## Description

### Technical Field

The present disclosure relates to the technical field of mobile communications, and particularly to a method and system for querying and responding to grouped electronic shelf labels.

### Background

This section is intended to provide a background or a context for the embodiments of the present disclosure set forth in the claims. The description herein is not admitted to be the prior art just because it is included in this section.

In an electronic shelf label system, a base station needs to perform data communication with an electronic shelf label, and the information to be issued includes but is not limited to the information to be displayed on a screen of the electronic shelf label. In order to ensure the correctness and reliability of the data transmission, the base station needs to query and confirm the data transmission of the electronic shelf label in communication, the electronic shelf label needs to make a response, and then the base station retransmits the data of the electronic shelf label with incorrect communication data transmission.

In the prior art, the base station separately issues a query instruction to each shelf label, and the shelf labels return response messages respectively. In practical application scenarios, each base station should be responsible for the data issuance with thousands of shelf labels. The existing query response mechanism generates a large amount of communication data, thereby reducing the efficiency of effective service data transmission and the system service throughput.

### Summary

The embodiments of the present disclosure provide a method for querying and responding to grouped electronic shelf labels, including:
grouping, by a control center, electronic shelf labels managed by each base station;
issuing, by the control center, data to designated electronic shelf labels respectively through the base station;
sending, by the base station, a group query instruction to the designated electronic shelf labels on a group basis; and
reporting, by each of the electronic shelf labels, a response result to the base station based on the group query instruction.

The embodiments of the present disclosure further provide a system for querying and responding to grouped electronic shelf labels, including a control center, a base station and electronic shelf labels;
the control center, the base station and the electronic shelf labels are configured to implement the aforementioned method for querying and responding to grouped electronic shelf labels.

The embodiments of the present disclosure further provide a computer device, including a memory, a processor and a computer program stored in the memory and runnable in the processor, wherein when executing the computer program, the processor implements the aforementioned method for querying and responding to grouped electronic shelf labels.

The embodiments of the present disclosure further provide a computer-readable storage medium which stores a computer program, wherein when executed by a processor, the computer program implements the aforementioned method for querying and responding to grouped electronic shelf labels.

The embodiments of the present disclosure further provide a computer program product, including a computer program, wherein when executed by a processor, the computer program implements the aforementioned method for querying and responding to grouped electronic shelf labels.

In the embodiments of the present disclosure, compared with the technical solution in the prior art that the base station separately issues an query instruction to each shelf label, and the shelf labels return response messages, respectively, in the present disclosure, a control center groups electronic shelf labels managed by each base station; the control center issues data to designated electronic shelf labels respectively through the base station; the base station sends a group query instruction to the designated electronic shelf labels on a group basis; and the electronic shelf label reports a response result to the base station based on the group query instruction. According to the present disclosure, a large number of query instructions are simplified into one query instruction, so that a transmission data volume for querying a large number of electronic shelf labels is greatly saved, the overhead caused by queries on the system is reduced, and the system service throughput is improved.

### Brief Description of the Drawings

In order to more clearly explain the technical solutions in the embodiments of the present disclosure or in the prior art, the drawings to be used in the description of the embodiments or the prior art will be briefly introduced below. Obviously, the drawings used in the following description only illustrate some embodiments of the present disclosure, and other drawings can be obtained from these drawings by persons of ordinary skill in the art without paying any creative labor. In the drawings:
FIG. 1 illustrates a structural block diagram of a system for querying and responding to grouped electronic shelf labels according to an embodiment of the present disclosure;
Fig. 2 illustrates a schematic diagram of grouping electronic shelf labels according to an embodiment of the present disclosure;
Fig. 3 illustrates a flowchart 1 (from a system perspective) of a method for querying and responding to grouped electronic shelf labels according to an embodiment of the present disclosure;
Fig. 4 illustrates a flowchart 2 (from a system perspective) of a method for querying and responding to grouped electronic shelf labels according to an embodiment of the present disclosure;
Fig. 5 illustrates a flowchart 3 (from a system perspective) of a method for querying and responding to grouped electronic shelf labels according to an embodiment of the present disclosure;
Fig. 6 illustrates a flowchart 4 (from a system perspective) of a method for querying and responding to grouped electronic shelf labels according to an embodiment of the present disclosure; and
Fig. 7 illustrates a flowchart 5 (from a system perspective) of a method for querying and responding to grouped electronic shelf labels according to an embodiment of the present disclosure.

### Description of the Embodiments

In order that the objectives, technical solutions and advantages of the embodiments of the present disclosure are clearer, the technical solutions in the embodiments of the present disclosure will be further described below with reference to the drawings. Here, the exemplary embodiments of the present disclosure and the descriptions thereof are used to explain the present disclosure and are not used as limitations thereto.

In the prior art, the base station separately issues a query instruction to each shelf label, and the shelf labels return response messages respectively, which leads to the problem that the existing query response mechanism generates a large amount of communication data, thereby reducing the efficiency of effective service data transmission and the system service throughput. Therefore, it is necessary to invent a query mechanism and method which can reduce the amount of communication data of the query response mechanism, decrease the waste of the communication time and improve the system service throughput.

On this basis, the present disclosure proposes a method and system for querying and responding to grouped electronic shelf labels, which are described in detail as follows.

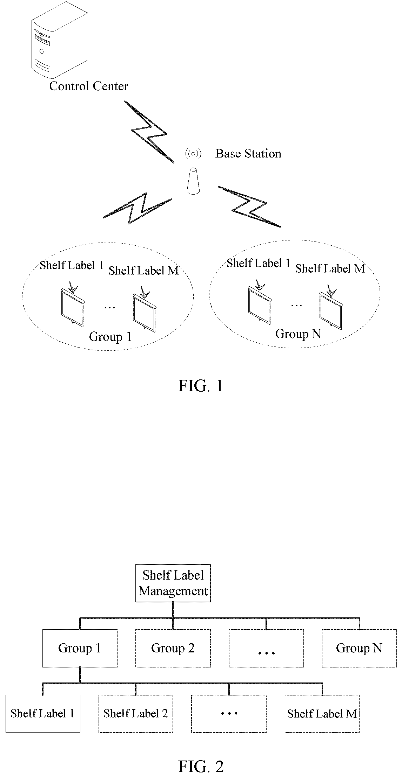

FIG. 1 illustrates a structural block diagram of a system for querying and responding to grouped electronic shelf labels according to an embodiment of the present disclosure. As illustrated in FIG. 1, the system includes a control center, a base station and electronic shelf labels. In which, the electronic shelf labels are divided into N groups, and each group includes M electronic shelf labels, as illustrated in FIG. 2, where the specific values of N and M are determined according to the actual situation.

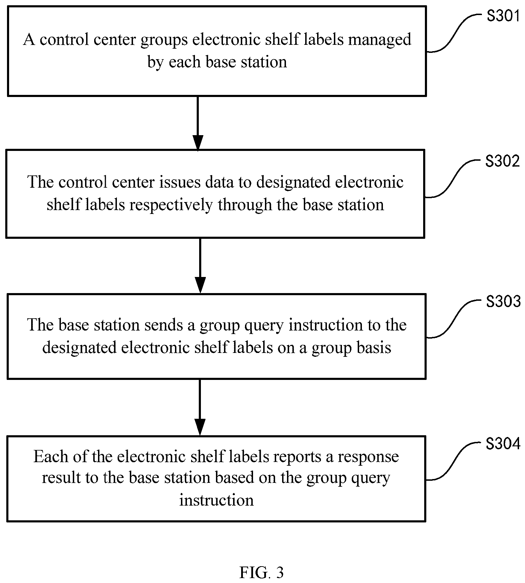

The specific flow of a method for querying and responding to grouped electronic shelf labels based on the system is illustrated in FIG. 3, including:
step 301: a control center groups electronic shelf labels managed by each base station;
step 302: the control center issues data to designated electronic shelf labels respectively through the base station;
step 303: the base station sends a group query instruction to the designated electronic shelf labels on a group basis; and
step 304: Each of the electronic shelf labels reports a response result to the base station based on the group query instruction.

Specifically, the designated electronic shelf labels are those requiring communication. For example, if the screen display data is transmitted to a plurality of electronic shelf labels, the plurality of electronic shelf labels are designated.

The group query instruction is generated and sent by the base station. Since the base station already acquires the designated electronic shelf labels when the control center issues the data to the designated electronic shelf labels respectively through the base station, the base station may determine whether the designated electronic shelf labels have received the data and the situation of the data reception. Of course, it is also possible that the control center generates and sends a group query instruction to the base station, and then the base station sends the group query instruction to the electronic shelf labels.

In the embodiment of the present disclosure, the group query instruction may include a group number and an electronic shelf label identification.

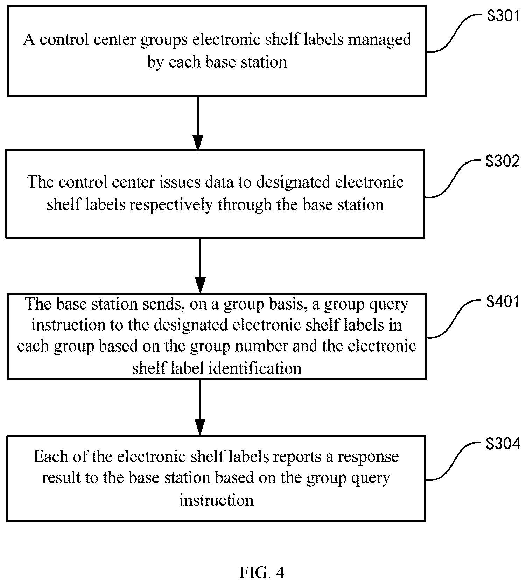

As illustrated in FIG. 4, in step 303, the base station sends a group query instruction to the designated electronic shelf labels on a group basis, which includes:
step 401: the base station sends, on a group basis, a group query instruction to the designated electronic shelf labels in each group based on the group number and the electronic shelf label identification.

Specifically, since the group query instruction is sent based on groups and several electronic shelf labels, it is necessary to determine the groups to which the group query instruction will be sent, and then it is necessary to define the group number in the group query instruction, or define one or several electronic shelf labels in the group to which the group query instruction will be sent, so the electronic shelf label identification may be added into the group query instruction, thus, it enables the designation of sending the group query instruction to one or several electronic shelf labels in one or several groups, rather than all the electronic shelf labels.

In the embodiment of the present disclosure, the group query instruction may include a response sending time.

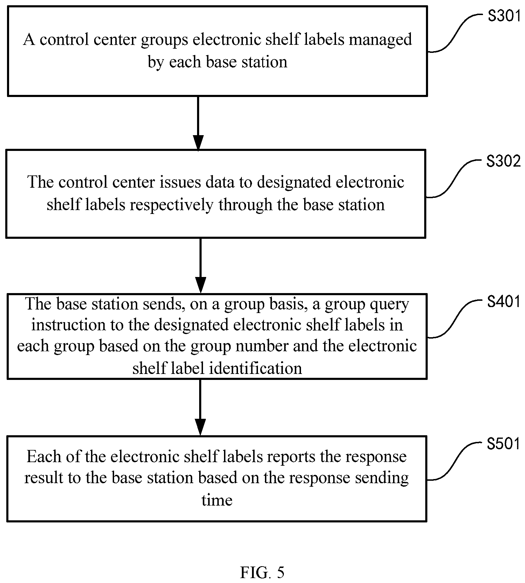

As illustrated in FIG. 5, in step 304, each of the electronic shelf labels reports a response result to the base station based on the group query instruction, which includes:
step 501: Each of the electronic shelf labels reports the response result to the base station based on the response sending time.

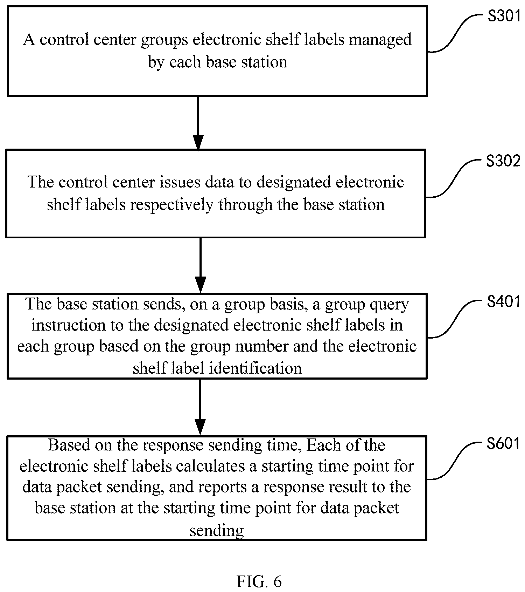

Specifically, it is possible to define the time for each of the electronic shelf labels to return the response. When the response sending time is reached, the response result may be reported in segmented time periods, and the specific implementation thereof is illustrated in FIG. 6.

As illustrated in FIG. 6, in step 304, each of the electronic shelf labels reports a response result to the base station based on the group query instruction, which includes:
step 601: based on the response sending time, each of the electronic shelf labels calculates a starting time point for data packet sending, and reports a response result to the base station at the starting time point for data packet sending.

Specifically, each electronic shelf label calculates its own starting time point for data packet sending according to the response sending time and the electronic shelf label identification, and then reports the response result to the base station when the corresponding starting time point for data packet sending is reached.

The time interval between the electronic shelf labels (e.g., 1 ms or other time) is agreed after the electronic shelf labels are grouped by the control center. For example, in the same group, if the time interval between the first electronic shelf label and the second electronic shelf label is 1 ms, the time interval between the first electronic shelf label and the third electronic shelf label is 2 ms, the time interval between the first electronic shelf label and the fourth electronic shelf label is 3 ms, and so on. When the electronic shelf label identification is acquired, the time interval between different electronic shelf labels can be acquired, and the starting time point for data packet sending can be calculated according to the time interval, i.e., the starting time point for data packet sending can be obtained by adding the interval time to the response sending time. For example, the first electronic shelf label may be sent at the point of the response sending time, and the next electronic shelf label may be sent at a time point of the response sending time plus (the electronic shelf label identification - 1) ms. It is also possible that the first electronic shelf label may be sent at the time point of the response sending time plus 1 ms, and the next electronic shelf label may be sent at a time point of the response sending time plus (the electronic shelf label identification) ms.

Specifically, the response result indicates whether the electronic shelf label correctly receives the issued data; if so, the response result indicates "received"; and if not, the response result indicates "not received".

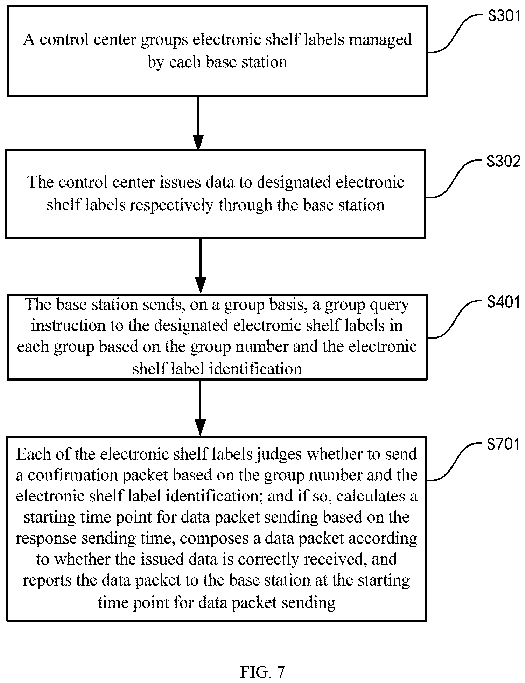

Specifically, as illustrated in FIG. 7, step 601 specifically includes:
step 701: Each of the electronic shelf labels judges whether to send a confirmation packet according to the group number and the electronic shelf label identification; and if so, calculates a starting time point for data packet sending according to the response sending time, composes a data packet according to whether the issued data is correctly received, and reports the data packet to the base station at the starting time point for data packet sending.

Specifically, each electronic shelf label firstly judges whether it is necessary to send the confirmation packet based on the group number and the shelf label information (shelf label identification) carried in the group query instruction; if not, does not make any action; and if so, calculates its own starting time point for data packet sending according to the response sending time in the group query instruction, and sends the confirmation packet at the starting time point.

In addition, the method of the present disclosure further includes:
after all the data packets are received, the base station reports all the data packets to the control center.

The acquisition, storage, use and processing of the data in the technical solution of the present disclosure meets the relevant provisions of the national laws and regulations.

The embodiments of the present disclosure further provide a computer device, which includes a memory, a processor and a computer program stored in the memory and runnable in the processor, wherein when executing the computer program, the processor implements the aforementioned method for querying and responding to grouped electronic shelf labels.

The embodiments of the present disclosure further provide a computer-readable storage medium which stores a computer program, wherein when executed by a processor, the computer program implements the aforementioned method for querying and responding to grouped electronic shelf labels.

The embodiments of the present disclosure further provide a computer program product, which includes a computer program, wherein when executed by a processor, the computer program implements the aforementioned method for querying and responding to grouped electronic shelf labels.

In the embodiments of the present disclosure, compared with the technical solution in the prior art that the base station separately issues an query instruction to each shelf label, and the shelf labels return response messages, respectively, in the present disclosure, a control center groups electronic shelf labels managed by each base station; the control center issues data to designated electronic shelf labels respectively through the base station; the base station sends a group query instruction to the designated electronic shelf labels on a group basis; and the electronic shelf label reports a response result to the base station based on the group query instruction. According to the present disclosure, a large number of query instructions are simplified into one query instruction, so that a transmission data volume for querying a large number of electronic shelf labels is greatly saved, the overhead caused by queries on the system is reduced, and the system service throughput is improved.

Persons skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, device (system) and computer program product according to the embodiments of the present disclosure. It should be appreciated that each flow and/or block in the flowchart and/or the block diagram and combinations of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes the function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing the function(s) specified in one or more flows in the flowchart and/or one or more blocks in the block diagram.

The specific embodiments described above make further detailed explanations to the objectives, technical solutions and advantageous effects of the present disclosure. It should be understood that those described above are only specific embodiments of the present disclosure and are not intended to limit the protection scope of the present disclosure. Any modification, equivalent substitution or improvement made within the spirit and principle of the present disclosure should fall within the protection scope of the present disclosure.

## Claims

1. A method for querying and responding to grouped electronic shelf labels, comprising:
grouping, by a control center, electronic shelf labels managed by each base station;
issuing, by the control center, data to designated electronic shelf labels respectively through the base station;
sending, by the base station, a group query instruction to the designated electronic shelf labels on a group basis; and
reporting, by each of the electronic shelf labels, a response result to the base station based on the group query instruction.

2. The method for querying and responding to grouped electronic shelf labels according to claim 1, wherein the group query instruction comprises a group number and an electronic shelf label identification;
the sending, by the base station, a group query instruction to the designated electronic shelf labels on a group basis comprises:
sending by the base station, on a group basis, a group query instruction to the designated electronic shelf labels in each group based on the group number and the electronic shelf label identification.

3. The method for querying and responding to grouped electronic shelf labels according to claim 2, wherein the group query instruction comprises response sending time;
the reporting, by each of the electronic shelf labels, a response result to the base station based on the group query instruction comprises:
reporting, by each of the electronic shelf labels, a response result to the base station based on the response sending time.

4. The method for querying and responding to grouped electronic shelf labels according to claim 2, wherein the group query instruction comprises response sending time;
the reporting, by each of the electronic shelf labels, a response result to the base station based on the group query instruction comprises:
based on the response sending time, calculating, by each of the electronic shelf labels, a starting time point for data packet sending, and reporting a response result to the base station at the starting time point for data packet sending.

5. The method for querying and responding to grouped electronic shelf labels according to claim 2, wherein the group query instruction comprises response sending time;
the reporting, by each of the electronic shelf labels, a response result to the base station based on the group query instruction comprises:
judging, by each of the electronic shelf labels, whether to send a confirmation packet according to the group number and the electronic shelf label identification; and if so, calculating a starting time point for data packet sending according to the response sending time, composing a data packet according to whether the issued data is correctly received, and reporting the data packet to the base station at the starting time point for data packet sending.

6. The method for querying and responding to grouped electronic shelf labels according to claim 1, further comprising:
after all the data packets are received, reporting, by the base station, all the data packets to the control center.

7. A system for querying and responding to grouped electronic shelf labels, comprising a control center, a base station and electronic shelf labels;
the control center, the base station and the electronic shelf labels are configured to implement the method for querying and responding to grouped electronic shelf labels according to claim 1.

8. A computer device, comprising a memory, a processor and a computer program stored in the memory and runnable in the processor, wherein when executing the computer program, the processor implements a method for querying and responding to grouped electronic shelf labels which comprises:
grouping, by a control center, electronic shelf labels managed by each base station;
issuing, by the control center, data to designated electronic shelf labels respectively through the base station;
sending, by the base station, a group query instruction to the designated electronic shelf labels on a group basis; and
reporting, by each of the electronic shelf labels, a response result to the base station based on the group query instruction.

9. A computer-readable storage medium, which stores a computer program, wherein when executed by a processor, the computer program implements a method for querying and responding to grouped electronic shelf labels which comprises:
grouping, by a control center, electronic shelf labels managed by each base station;
issuing, by the control center, data to designated electronic shelf labels respectively through the base station;
sending, by the base station, a group query instruction to the designated electronic shelf labels on a group basis; and
reporting, by each of the electronic shelf labels, a response result to the base station based on the group query instruction.
